# EUROPEAN PATENT APPLICATION

(11) **EP 4 837 944 A1**
(43) Date of publication of application: **11.11.2026**
(21) Application number: 24924587.9
(22) Date of filing: 17.12.2024
(51) Int. Cl.: C09K 19/02, C09K 19/38, G02F 1/13, G02F 1/137, G02F 1/1343

(54) **LIQUID CRYSTAL COMPOSITION AND LIQUID CRYSTAL ELEMENT**

(30) Priority: 16.02.2024 JP 2024022413
(71) Applicant: KYUSHU NANOTEC OPTICS CO., LTD., Oita 879-1502 (JP)
(72) Inventor: BABA, Junichi, Hayami-gun, Oita 879-1502 (JP)
(74) Representative: Isarpatent
(86) International application number: PCT/JP2024/044549
(87) International publication number: WO 2025/173384

(57) **Abstract**

A liquid crystal composition comprising a polymerizable organic compound and a liquid crystal compound, wherein the resistivity of the liquid crystal composition is 1 x 10⁻¹¹ Ω·m or greater and less than 1 x 10⁻⁵ Ω·m. A liquid crystal element comprising: a planar first substrate; a first conductive film which is disposed on one surface side of the first substrate and has electroconductivity; a liquid crystal layer which is disposed on a side of the first conductive film opposite to the first substrate and has a liquid crystal composition; a second conductive film which is disposed on a side of the liquid crystal layer opposite to the first conductive film and has electroconductivity; and a planar second substrate disposed on a side of the second conductive film opposite to the liquid crystal layer, wherein the liquid crystal composition comprises a polymerizable organic compound and a liquid crystal compound, and the resistivity of the liquid crystal composition is 1 x 10⁻¹¹ Ω·m or greater and less than 1 x 10⁻⁵ Ω·m.

## Description

### Technical Field

The present invention relates to a liquid crystal composition and a liquid crystal element. More specifically, the present invention relates to, for example, a liquid crystal composition used in a liquid crystal display, and a liquid crystal element in which the liquid crystal composition of the present invention is used.

### Related Art

Liquid crystal elements such as liquid crystal display panels are used in various household electric apparatuses, measuring instruments, automotive panels, word processors, electronic organizers, printers, computers, televisions, and the like.

A liquid crystal element has a configuration in which a liquid crystal layer is sealed between a pair of glass substrates.

The glass substrates are provided with electrodes for applying an electric field to the liquid crystal layer. By controlling the electric field, orientation of liquid crystal molecules in the liquid crystal layer changes, and an image can be displayed.

A material constituting the liquid crystal layer is a liquid crystal composition, and various liquid crystal compositions have conventionally been proposed.

For example, Patent Literature 1 describes a liquid crystal composition comprising two or more compounds which have 2 to 4 ring structures between two side chains, in which one or more ring structures are 2,3-difluorobenzene skeletons, two side chains are respectively linked to different ring structures, positions of the 2,3-difluorobenzene skeletons in the compounds differ, and numbers of ring structures in the compounds are the same.

Here, the number of ring structures is defined as N. When the molecular weights of the two side chains differ, the position of the ring structure to which the side chain having the larger molecular weight is linked is defined as 1, the position of the ring structure to which the side chain having the smaller molecular weight is linked is defined as N, and consecutive numbers from 1 to N are assigned in order including ring structures therebetween. When the molecular weights of the two side chains are the same, the position of the ring structure to which a side chain is linked is defined as 1, and the position of the ring structure to which no side chain is linked is defined as 2.

Such a liquid crystal composition provides effects of having a low crystallization temperature and excellent compatibility.

### Citation List

### Patent Literature

Patent Literature 1: Japanese Patent Application Publication No. 2016-27165

### SUMMARY OF INVENTION

### Problem to Be Solved by Invention

Incidentally, a liquid crystal element having a ferroelectric liquid crystal composition such as the ferroelectric liquid crystal composition described in Patent Literature 1 provides high-speed response which is at least 10 times faster than a liquid crystal element having a nematic liquid crystal; however, in order to perform thin-film transistor driving using the ferroelectric liquid crystal composition, a liquid crystal material having high resistivity is essential.

The resistivity of the liquid crystal composition described in Patent Literature 1 is 10¹¹ Ω·cm or greater, namely 10⁹ Ω·m or greater; however, when the resistivity is high in this manner, hysteresis becomes large, display delay and response defects of a liquid crystal element occur, and contrast also deteriorates.

The present invention has been made in view of the above points, and an object of the present invention is to provide a liquid crystal composition capable of realizing production of a liquid crystal element having favorable response and contrast, and to provide a liquid crystal element having favorable response and contrast.

### Means for Solving Problem

As a result of intensive studies conducted by the inventors in order to achieve the above object, the inventors found that, when a liquid crystal composition having a resistivity which is extremely low compared with the conventional liquid crystal composition value of 10⁹ Ω·m or greater and, moreover, having a resistivity falling within a specific range is used in a liquid crystal element, response and contrast become favorable, thereby completing the present invention.

That is, in order to achieve the above object, the liquid crystal composition of the present invention is a liquid crystal composition comprising a polymerizable organic compound and a liquid crystal compound, and the resistivity of the liquid crystal composition is 1 x 10⁻¹¹ Ω·m or greater and less than 1 x 10⁻⁵ Ω·m.

Here, since the resistivity of the liquid crystal composition is 1 x 10⁻¹¹ Ω·m or greater and less than 1 x 10⁻⁵ Ω·m, hysteresis in a liquid crystal element can be suppressed.

Further, since the resistivity of the liquid crystal composition is 1 x 10⁻¹¹ Ω·m or greater and less than 1 x 10⁻⁵ Ω·m, liquid crystal orientation can be enhanced.

Further, the liquid crystal composition of the present invention can have a configuration comprising at least one additive compound selected from a piperidine compound, a phosphoric acid compound, or a halogen compound.

In this case, at least one additive compound selected from a piperidine compound, a phosphoric acid compound, or a halogen compound is mixed together with the organic compound and the liquid crystal compound, thereby inducing ionic conduction and making the resistivity of the liquid crystal composition easily adjustable to 1 x 10⁻¹¹ Ω·m or greater and less than 1 x 10⁻⁵ Ω·m.

Further, in the liquid crystal composition of the present invention, the content of the additive compound can be 0.2 to 17 mass% based on the total amount of the liquid crystal composition.

In this case, the resistivity of the liquid crystal composition is even more easily adjustable to 1 x 10⁻¹¹ Ω·m or greater and less than 1 x 10⁻⁵ Ω·m.

Further, in the liquid crystal composition of the present invention, the resistivity of the liquid crystal composition can be 1 x 10⁻⁹ Ω·m or greater and less than 1 x 10⁻⁷ Ω·m.

In this case, hysteresis in a liquid crystal element can be particularly suppressed, and liquid crystal orientation can be particularly enhanced.

Further, in the liquid crystal composition of the present invention, the content of the additive compound can be 5.0 to 14.0 mass% based on the total amount of the liquid crystal composition.

In this case, the resistivity of the liquid crystal composition is easily adjustable to 1 x 10⁻⁹ Ω·m or greater and less than 1 x 10⁻⁷ Ω·m.

Further, in the liquid crystal composition of the present invention, the additive compound can be ethyl piperidine-4-carboxylate, and the content of the additive compound can be 5.0 to 13.0 mass% based on the total amount of the liquid crystal composition.

In this case, the resistivity of the liquid crystal composition is easily adjustable to 1 x 10⁻⁹ Ω·m or greater and less than 1 x 10⁻⁷ Ω·m, hysteresis in a liquid crystal element can be particularly suppressed, and liquid crystal orientation can be particularly enhanced.

Further, in order to achieve the above object, the liquid crystal element of the present invention comprises: a planar first substrate; a first conductive film which is disposed on one surface side of the first substrate and has electroconductivity; a liquid crystal layer which is disposed on a side of the first conductive film opposite to the first substrate and has a liquid crystal composition; a second conductive film which is disposed on a side of the liquid crystal layer opposite to the first conductive film and has electroconductivity; and a planar second substrate disposed on a side of the second conductive film opposite to the liquid crystal layer. The liquid crystal composition comprises a polymerizable organic compound and a liquid crystal compound, and the resistivity of the liquid crystal composition is 1 x 10⁻¹¹ Ω·m or greater and less than 1 x 10⁻⁵ Ω·m.

Here, since the resistivity of the liquid crystal composition is 1 x 10⁻¹¹ Ω·m or greater and less than 1 x 10⁻⁵ Ω·m, hysteresis in a liquid crystal element can be suppressed.

Further, since the resistivity of the liquid crystal composition is 1 x 10⁻¹¹ Ω·m or greater and less than 1 x 10⁻⁵ Ω·m, liquid crystal orientation can be enhanced.

### Effects of Invention

The liquid crystal composition according to the present invention can realize production of a liquid crystal element having favorable response and contrast.

The liquid crystal element according to the present invention has favorable response and contrast.

### BRIEF DESCRIPTION OF DRAWINGS

[FIG. 1] is a schematic cross-sectional view showing an example of a liquid crystal element to which the present invention is applied.
[FIG. 2] is a schematic view showing an example of equipment for measuring driving response of a liquid crystal element.
[FIG. 3] is a schematic view showing a hysteresis curve of a liquid crystal element (Example 1) to which the present invention is applied.
[FIG. 4] is a schematic view showing a hysteresis curve of a liquid crystal element (Example 2) to which the present invention is applied.
[FIG. 5] is a schematic view showing a hysteresis curve of a conventional liquid crystal element (Comparative Example 1).
[FIG. 6] is a schematic view showing a hysteresis curve of a liquid crystal element (Example 3) to which the present invention is applied.
[FIG. 7] is a schematic view showing a hysteresis curve of a liquid crystal element (Example 4) to which the present invention is applied.
[FIG. 8] is a schematic view showing a hysteresis curve of a liquid crystal element (Example 5) to which the present invention is applied.
[FIG. 9] is a schematic view showing a hysteresis curve of a liquid crystal element (Example 6) to which the present invention is applied.
[FIG. 10] is a schematic view showing a hysteresis curve of a liquid crystal element (Example 7) to which the present invention is applied.
[FIG. 11] is a schematic view showing a hysteresis curve of a conventional liquid crystal element (Comparative Example 2).
[FIG. 12] is a schematic view showing a hysteresis curve of a liquid crystal element (Example 8) to which the present invention is applied.
[FIG. 13] is a schematic view showing a hysteresis curve of a liquid crystal element (Example 9) to which the present invention is applied.
[FIG. 14] is a schematic view showing a hysteresis curve of a liquid crystal element (Example 10) to which the present invention is applied.
[FIG. 15] is a schematic view showing a hysteresis curve of a conventional liquid crystal element (Comparative Example 3).
[FIG. 16] is a schematic view showing a hysteresis curve of a conventional liquid crystal element (Comparative Example 4).

### DESCRIPTION OF EMBODIMENTS

The liquid crystal composition of the present invention comprises a polymerizable organic compound and a liquid crystal compound.

Further, the resistivity of the liquid crystal composition of the present invention is 1 x 10⁻¹¹ Ω·m or greater and less than 1 x 10⁻⁵ Ω·m, preferably 1 x 10⁻¹⁰ Ω·m or greater and less than 1 x 10⁻⁶ Ω·m, and most preferably 1 x 10⁻⁹ Ω·m or greater and less than 1 x 10⁻⁷ Ω·m.

Since the resistivity of the liquid crystal composition of the present invention is 1 x 10⁻¹¹ Ω·m or greater and less than 1 x 10⁻⁵ Ω·m, hysteresis in the liquid crystal element of the present invention to which the liquid crystal composition of the present invention is applied can be suppressed, and liquid crystal orientation can be enhanced.

Further, when the resistivity of the liquid crystal composition of the present invention is 1 x 10⁻⁹ Ω·m or greater and less than 1 x 10⁻⁷ Ω·m, hysteresis in the liquid crystal element of the present invention to which the liquid crystal composition of the present invention is applied can be particularly suppressed, and liquid crystal orientation can be particularly enhanced.

Here, the organic compound comprised in the liquid crystal composition of the present invention is not particularly limited and may be any organic compound, as long as the resistivity of the liquid crystal composition can be adjusted to 1 x 10⁻⁹ Ω·m or greater and less than 1 x 10⁻⁷ Ω·m and the organic compound is polymerizable.

Specifically, examples of the organic compound comprised in the liquid crystal composition of the present invention include at least one selected from a monofunctional acrylate ester monomer, a monofunctional acrylate ester oligomer, a monofunctional acrylate ester polymer, a monofunctional methacrylate ester monomer, a monofunctional methacrylate ester oligomer, a monofunctional methacrylate ester polymer, a 2- to 5-functional acrylate ester monomer, a 2- to 5-functional acrylate ester oligomer, a 2- to 5-functional acrylate ester polymer, a 2- to 5-functional methacrylate ester monomer, a 2- to 5-functional methacrylate ester oligomer, a 2- to 5-functional methacrylate ester polymer, a urethane acrylate ester monomer, a urethane acrylate ester oligomer, a urethane acrylate ester polymer, a urethane methacrylate ester monomer, a urethane methacrylate ester oligomer, a urethane methacrylate ester polymer, a polyester acrylate monomer, a polyester acrylate oligomer, a polyester acrylate polymer, a polyester methacrylate monomer, a polyester methacrylate oligomer, a polyester methacrylate polymer, a vinyl acrylate ester monomer, a vinyl acrylate ester oligomer, a vinyl acrylate ester polymer, a vinyl methacrylate ester monomer, a vinyl methacrylate ester oligomer, a vinyl methacrylate ester polymer, an epoxy ester acrylate monomer, an epoxy ester acrylate oligomer, an epoxy ester acrylate polymer, an epoxy ester methacrylate monomer, an epoxy ester methacrylate oligomer, or an epoxy ester methacrylate polymer.

Further, the content of the polymerizable organic compound comprised in the liquid crystal composition of the present invention is specifically, for example, 10 to 75 mass% based on the total amount of the liquid crystal composition of the present invention.

Further, the liquid crystal compound comprised in the liquid crystal composition of the present invention is not particularly limited and may be any liquid crystal compound, as long as the resistivity of the liquid crystal composition can be adjusted to 1 x 10⁻⁹ Ω·m or greater and less than 1 x 10⁻⁷ Ω·m.

Specifically, for example, the liquid crystal compound comprised in the liquid crystal composition of the present invention is prepared by setting a target combination of physical property values, namely, a nematic phase-isotropic liquid phase transition temperature (Tni), refractive index anisotropy (Δn), and dielectric anisotropy (Δε), and using a component liquid crystal compound alone, or mixing a plurality of component liquid crystal compounds, so as to match or approximate the target physical property values.

Further, the nematic phase-isotropic liquid phase transition temperature (Tni) of the liquid crystal compound comprised in the liquid crystal composition of the present invention is specifically, for example, 40 °C to 150 °C, and preferably 80 °C to 150 °C.

Further, the refractive index anisotropy (Δn) of the liquid crystal compound comprised in the liquid crystal composition of the present invention is specifically, for example, 0.01 to 0.50, preferably 0.1 to 0.4, and most preferably 0.1 to 0.3.

Further, the dielectric anisotropy (Δε) of the liquid crystal compound comprised in the liquid crystal composition of the present invention is specifically, for example, 1 to 25, preferably 5 to 20, and most preferably 5 to 10.

When the liquid crystal compound is a negative-type liquid crystal compound, the value of the dielectric anisotropy (Δε) is a negative value.

Specific examples of the component liquid crystal compound used for preparing the liquid crystal compound comprised in the liquid crystal composition of the present invention include a cyanobiphenyl-based liquid crystal compound, an ester-based liquid crystal compound, a Schiff-based liquid crystal compound, a tolans-based liquid crystal compound, a PCP-based liquid crystal compound, and a carboxylic acid-based liquid crystal compound.

Further, the cyanobiphenyl-based liquid crystal compound is specifically, for example, at least one selected from 4-cyano-4'-ethylbiphenyl, 4-cyano-4'-pentylbiphenyl, 4-cyano-4'-octyloxybiphenyl, 4-cyano-4'-n-pentoxybiphenyl, 4-cyano-4'-propylbiphenylcyclohexane, and 4-cyano-4'-pentylterphenyl.

Further, the ester-based liquid crystal compound is specifically, for example, at least one selected from 4-pentyl-4'-hexyloxyphenyl ester, 4-cyano-4'-butylphenyl ester, 4-cyano-4'-pentylphenyl ester, 4-cyano-4'-hexyloxyphenyl ester, 3-fluoro-4-cyano-4'-ethylphenyl ester, 3,4-fluoro-4'-ethylphenyl ester, 4-cyano-3,5-difluoro-4'-ethylphenyl ester, and 4-ethoxy-4'-propylphenylcyclohexane ester.

Further, the Schiff-based liquid crystal compound is specifically, for example, at least one selected from 4-methoxybenzylidene-4-butylaniline and 4-ethoxybenzylidene-4-butylaniline.

Further, the tolans-based liquid crystal compound is specifically, for example, at least one selected from 4'-methylphenyltolans, 4-butoxy-4'-propylphenyltolans, 4-fluoro-4'-ethylphenyltolans, 3,4-fluoro-4'-ethylphenyltolans, 3,4,5-trifluoro-4'-ethylphenyltolans, 4-ethyl-4'-propylcyclohexanetolans, 4'-pentylcyclohexane ester phenyltolans, 4-methoxy-4'-propylcyclohexane ester biphenyltolans, 4-fluoro-4'-propylcyclohexane ester biphenyltolans, 4-methyl-4'-propylterphenyl tolans ester, and 4-cyano-4'-ethyltriphenyl tolans ester.

Further, the PCP-based liquid crystal compound is specifically, for example, at least one selected from 4-fluoro-4'-alkylphenyl ester cyclohexane ester phenyl, 3,4-fluoro-4'-alkylphenyl ester cyclohexane ester phenyl, and 4-alkyl-4'-alkylphenyl ester cyclohexane ester phenyl.

Further, the carboxylic acid-based liquid crystal compound is specifically, for example, at least one selected from p-alkylbenzoic acid, alkoxybenzoic acid, alkylphenyl ester benzoic acid, and alkylcyclohexane ester benzoic acid.

The case where the aforementioned component liquid crystal compound alone is used to prepare the liquid crystal compound comprised in the liquid crystal composition of the present invention is a case where the component liquid crystal compound alone has the target physical property values.

Further, the content of the liquid crystal compound comprised in the liquid crystal composition of the present invention can be specifically, for example, 15 to 75 mass% based on the total amount of the liquid crystal composition of the present invention.

Further, as long as the liquid crystal composition of the present invention comprises a polymerizable organic compound and a liquid crystal compound and the resistivity of the liquid crystal composition of the present invention is 1 x 10⁻¹¹ Ω·m or greater and less than 1 x 10⁻⁵ Ω·m, the liquid crystal composition of the present invention may comprise any compound.

For example, the liquid crystal composition of the present invention can comprise at least one additive compound selected from a piperidine compound, a phosphoric acid compound, or a halogen compound. When the liquid crystal composition of the present invention comprises such an additive compound, ionic conduction is induced, and the resistivity of the liquid crystal composition of the present invention is easily adjusted to 1 x 10⁻¹¹ Ω·m or greater and less than 1 x 10⁻⁵ Ω·m.

A high-purity liquid crystal compound having few impurities generally has high resistivity, and lowering the resistivity with a liquid crystal compound alone is difficult.

Similarly, in a liquid crystal composition which comprises a liquid crystal compound and a polymerizable organic compound monomer, lowering the resistivity is difficult, as the organic compound is polymerized and, after hardening, enters a polymer state and cannot be mixed in the liquid crystal compound.

Therefore, as one method for lowering the resistivity of a liquid crystal composition, a method of adding an additive compound which can induce ionic conduction and lower the resistivity is conceivable.

Here, specific examples of the piperidine compound include piperidine, ethyl piperidine-4-carboxylate, methyl piperidine-4-carboxylate, piperidine-1-sulfonyl chloride, piperidine-4-carboxamide, piperidine-1-carbothioamide, ethyl piperidin-1-ylacetate, and 1-hydroxypiperidine.

Further, specific examples of the phosphoric acid compound include chlorodiphenylphosphine, diphenyl phosphate, tert-butylphosphonic dichloride, diethyl phosphoramidate, phenylphosphinic acid, 2-ethylhexyl acid phosphate, and dibutyl phosphate.

Further, specific examples of the halogen compound include 4-(aminosulfonyl)-7-fluoro-2,1,3-benzoxadiazole, sodium fluoride, N-fluoropyridinium trifluoromethanesulfonate, sodium fluorophosphate, fluoro(phenyl)acetic acid, ethyl fluoroiodoacetate, sodium chloride, ammonium chloride, potassium chloride, calcium chloride, bromoacetic acid, methyl bromoacetate, bromosuccinic acid, sodium bromide, potassium bromide, sodium iodide, potassium iodide, calcium iodide, and methylammonium iodide.

Further, the content of the additive compound comprised in the liquid crystal composition of the present invention can be specifically, for example, 0.2 to 17 mass% based on the total amount of the liquid crystal composition of the present invention, and preferably can be 5.0 to 14.0 mass%.

When the content of the additive compound comprised in the liquid crystal composition of the present invention is 0.2 to 17 mass% based on the total amount of the liquid crystal composition of the present invention, the resistivity of the liquid crystal composition of the present invention is even more easily adjustable to 1 x 10⁻¹¹ Ω·m or greater and less than 1 x 10⁻⁵ Ω·m.

Further, when the content of the additive compound comprised in the liquid crystal composition of the present invention is 5.0 to 14.0 mass% based on the total amount of the liquid crystal composition of the present invention, the resistivity of the liquid crystal composition of the present invention is easily adjustable to 1 x 10⁻⁹ Ω·m or greater and less than 1 x 10⁻⁷ Ω·m.

Further, in the liquid crystal composition of the present invention, the additive compound can be ethyl piperidine-4-carboxylate, and the content of the additive compound can be 5.0 to 13.0 mass% based on the total amount of the liquid crystal composition of the present invention.

When such conditions are satisfied, the resistivity of the liquid crystal composition of the present invention is easily adjustable to 1 x 10⁻⁹ Ω·m or greater and less than 1 x 10⁻⁷ Ω·m, hysteresis in the liquid crystal element of the present invention to which the liquid crystal composition of the present invention is applied can be particularly suppressed, and liquid crystal orientation can be particularly enhanced.

Next, the liquid crystal element of the present invention will be described.

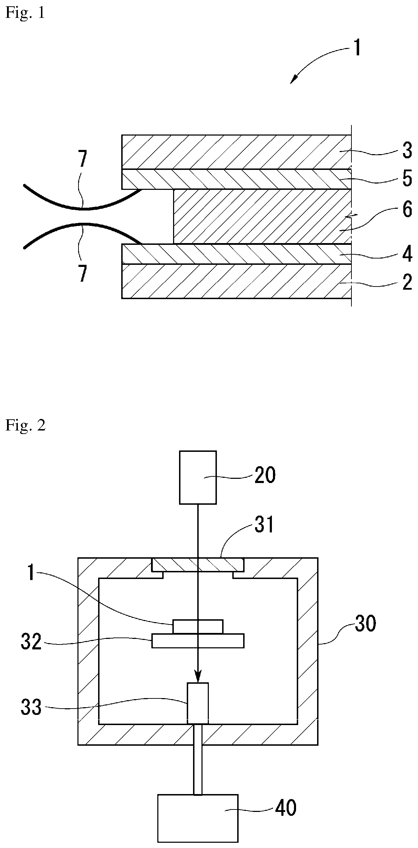

FIG. 1 is a schematic cross-sectional view showing an example of a liquid crystal element to which the present invention is applied.

A liquid crystal element 1 of the present invention shown in FIG. 1 comprises a planar, thin-film-shaped first transparent resin film substrate 2.

Further, the liquid crystal element 1 of the present invention comprises a first transparent conductive film 4.

Here, the first transparent conductive film 4 is disposed on one surface side of the first transparent resin film substrate 2 and has electroconductivity.

Further, the liquid crystal element 1 of the present invention comprises a liquid crystal layer 6.

Here, the liquid crystal layer 6 is disposed on a side of the first transparent conductive film 4 opposite to the first transparent resin film substrate 2, and has the liquid crystal composition of the present invention.

Further, the liquid crystal element 1 of the present invention comprises a second transparent conductive film 5.

Here, the second transparent conductive film 5 is disposed on a side of the liquid crystal layer 6 opposite to the first transparent conductive film 4 and has electroconductivity.

Further, the liquid crystal element 1 of the present invention comprises a planar, thin-film-shaped second transparent resin film substrate 3.

Here, the second transparent resin film substrate 3 is disposed on a side of the second transparent conductive film 5 opposite to the liquid crystal layer 6.

That is, the first transparent conductive film 4 covers one surface of the first transparent resin film substrate 2, and the second transparent conductive film 5 covers one surface of the second transparent resin film substrate 3.

Further, the liquid crystal layer 6 is in contact with such first transparent conductive film 4 and second transparent conductive film 5.

In this manner, as shown in FIG. 1, the liquid crystal element 1 of the present invention is a laminated body configured such that the liquid crystal layer 6 is sandwiched between the first transparent resin film substrate 2 provided with the first transparent conductive film 4 and the second transparent resin film substrate 3 provided with the second transparent conductive film 5.

The first transparent resin film substrate 2 and the second transparent resin film substrate 3 are each constituted by a material used for substrates of ordinary liquid crystal elements.

Specific examples of such a material include a polymer film made of polyethylene, polystyrene, polyethylene terephthalate (PET), polyvinyl alcohol, polycarbonate, polyvinyl chloride, polyimide, polysulfone, cycloolefin polymer, or triacetyl cellulose, and the like.

Further, the first transparent resin film substrate 2 is an example of a first substrate, and the second transparent resin film substrate 3 is an example of a second substrate.

Further, the first substrate and the second substrate do not necessarily need to be constituted by resin films, and can also be constituted by, for example, glass substrates.

Further, the first transparent conductive film 4 and the second transparent conductive film 5 are each constituted by a material used for conductive films of ordinary liquid crystal elements.

Specific examples of such a material include indium tin oxide (ITO), fluorine-doped tin oxide (FTO), tin oxide, zinc oxide, and carbon nanotubes.

Further, the first transparent conductive film and the second transparent conductive film are examples of a first conductive film and a second conductive film, respectively.

Further, in order to apply a voltage to the liquid crystal element 1 of the present invention, as shown in FIG. 1, conductor wires 7 are electrically connected to the liquid crystal element 1 of the present invention.

That is, at an end portion of the liquid crystal element 1 of the present invention, part of the liquid crystal layer 6 is removed to expose part of the first transparent conductive film 4 and part of the second transparent conductive film 5. Then, one end of each of two conductor wires 7 is electrically connected to a respective one of the exposed portion of the first transparent conductive film 4 and the exposed portion of the second transparent conductive film 5.

The other end of each conductor wire 7 is connected to a power source which is not shown.

Further, the driving response of liquid crystal elements in general, including the liquid crystal element 1 of the present invention, is measured as follows.

That is, FIG. 2 is a schematic view showing an example of equipment for measuring driving response of a liquid crystal element.

As shown in FIG. 2, when measuring the driving response of the liquid crystal element 1 of the present invention, a laser oscillator 20 capable of emitting laser light, a microscope temperature-controlled stage 30 provided with an observation window 31 capable of transmitting laser light, a light receiver 33 capable of receiving laser light which has passed through the observation window 31, and an oscilloscope 40 capable of measuring the intensity of the laser light received by the light receiver 33 are used.

Here, a sample stage 32 on which the liquid crystal element 1 of the present invention can be placed is provided in the microscope temperature-controlled stage 30.

Further, inside the sample stage 32, a flow path into which a coolant for cooling the sample stage 32 can be introduced is formed, or a heater for heating the sample stage 32 is incorporated. Illustration of such a flow path and heater is omitted.

With such a configuration, the liquid crystal element 1 of the present invention placed on the sample stage 32 can be cooled or heated indirectly through the sample stage 32.

Further, although not shown, an electrode terminal is present in the microscope temperature-controlled stage 30, and a voltage can be applied to the liquid crystal element 1 of the present invention through conductor wires.

Further, the sample stage 32 is constituted by a material which can transmit laser light.

Further, as shown in FIG. 2, the light receiver 33 is disposed in the microscope temperature-controlled stage 30 and on a side of the sample stage 32 opposite to a surface on which the liquid crystal element 1 of the present invention is placed.

Further, when no voltage is applied to the liquid crystal element 1 of the present invention, the liquid crystal element 1 of the present invention does not transmit laser light, namely, shields the laser light. When a voltage is applied to the liquid crystal element 1 of the present invention, the liquid crystal element 1 of the present invention transmits laser light.

A state in which no voltage is applied to the liquid crystal element 1 of the present invention is referred to as "OFF," and a state in which a voltage is applied to the liquid crystal element 1 of the present invention is referred to as "ON."

Accordingly, the light receiver 33 can receive laser light which has passed through the observation window 31, the liquid crystal element 1 of the present invention, and the sample stage 32.

### <Examples and Comparative Examples>

A liquid crystal composition of the present invention was prepared using a liquid crystal compound, a polymerizable organic compound, and an additive compound.

At this time, the resistivity of the liquid crystal composition was adjusted to 1 x 10⁻¹¹ Ω·m or greater and less than 1 x 10⁻⁵ Ω·m.

Further, for comparison, a conventional liquid crystal composition was prepared using a liquid crystal compound, a polymerizable organic compound, and an additive compound.

At this time, the resistivity of the liquid crystal composition was adjusted so as not to fall within the range of 1 x 10⁻¹¹ Ω·m or greater and less than 1 x 10⁻⁵ Ω·m, namely, to less than 1 x 10⁻¹¹ Ω·m or to 1 x 10⁻⁵ Ω·m or greater.

Further, the specific types and physical property values of the liquid crystal compounds used are shown in Table 1.

Further, the specific monomers of the organic compounds used and the contents of the monomers based on the total amount of the liquid crystal composition are shown in Table 2.

Further, Table 3 shows the contents of the liquid crystal compound, the organic compound, and the additive compound, each based on the total amount of the liquid crystal composition, the specific compound name of the additive compound used, and the resistivity of the liquid crystal composition.

Here, the contents of the organic compound shown in Table 3 are each the total of the contents of the monomers shown in Table 2.

Further, the resistivity of the liquid crystal composition was measured using a liquid crystal resistivity measurement system, Model SR-6517, manufactured by TOYO Corporation.

**[Table 1]**

| | Type of liquid crystal | Δε | Δn | Tni |
|---|---|---|---|---|
| Example 1 | Discotic liquid crystal compound | 9.4 | 0.122 | 138.2 |
| Example 2 | Positive-type nematic liquid crystal compound | 13.3 | 0.165 | 121.4 |
| Example 3 | Positive-type nematic liquid crystal compound | 9.7 | 0.142 | 129 |
| Example 4 | Positive-type nematic liquid crystal compound | 11.2 | 0.207 | 120.7 |
| Example 5 | Positive-type nematic liquid crystal compound | 11.9 | 0.242 | 130 |
| Example 6 | Negative-type nematic liquid crystal compound | -5.5 | 0.2 | 100 |
| Example 7 | Negative-type nematic liquid crystal compound | -7.4 | 0.217 | 101 |
| Example 8 | Positive-type nematic liquid crystal compound | 11.8 | 0.241 | 129 |
| Example 9 | Discotic liquid crystal compound | 13.3 | 0.165 | 121.4 |
| Example 10 | Discotic liquid crystal compound | 11.8 | 0.241 | 129 |
| Comparative Example 1 | Positive-type nematic liquid crystal compound | 9.4 | 0.122 | 138.2 |
| Comparative Example 2 | Discotic liquid crystal compound | 9.4 | 0.122 | 138.2 |
| Comparative Example 3 | Negative-type nematic liquid crystal compound | -4.6 | 0.185 | 99 |
| Comparative Example 4 | Negative-type nematic liquid crystal compound | -2.2 | 0.175 | 131 |

**[Table 2]**

| | Organic compound monomers and contents thereof (mass%) | | | |
|---|---|---|---|---|
| Example 1 | Monofunctional acrylate ester 16.1 | 2-functional methacrylate ester 10.7 | 3-functional acrylate ester 8.8 | Urethane acrylate ester 13.1 |
| Example 2 | Monofunctional acrylate ester 7.4 | 2-functional acrylate ester 12.4 | 3-functional methacrylate ester 15.9 | Vinyl methacrylate ester 13.8 |
| Example 3 | Monofunctional acrylate ester 8.0 | 2-functional methacrylate ester 17.6 | 6-functional acrylate ester 6.9 | Epoxy ester acrylate 24.6 |
| Example 4 | Monofunctional methacrylate ester 4.5 | 2-functional acrylate ester 3.3 | 3-functional methacrylate ester 4.1 | Polyester methacrylate 6.7 |
| Example 5 | Monofunctional methacrylate ester 11.7 | 2-functional acrylate ester 8.8 | 3-functional methacrylate ester 17.6 | Urethane methacrylate ester 20.5 |
| Example 6 | Monofunctional methacrylate ester 17.3 | 2-functional acrylate ester 14.5 | 5-functional acrylate ester 6.1 | Epoxy ester methacrylate 17.8 |
| Example 7 | Monofunctional acrylate ester 7.1 | 2-functional methacrylate ester 5.0 | 3-functional acrylate ester 4.5 | Polyester acrylate 9.8 |
| Example 8 | Monofunctional acrylate ester 4.1 | 2-functional methacrylate ester 7.2 | 3-functional acrylate ester 3.4 | Urethane acrylate ester 11.1 |
| Example 9 | Monofunctional acrylate ester 13.9 | 2-functional acrylate ester 7.7 | 3-functional acrylate ester 10.1 | Polyester acrylate 16.3 |
| Example 10 | Monofunctional acrylate ester 12.4 | 2-functional methacrylate ester 13.6 | 3-functional acrylate ester 11.3 | Urethane methacrylate ester 21.9 |
| Comparative Example 1 | Monofunctional acrylate ester 15.0 | 2-functional acrylate ester 5.4 | 3-functional methacrylate ester 10.7 | Polyester acrylate 22.5 |
| Comparative Example 2 | Monofunctional methacrylate ester 14.2 | 2-functional acrylate ester 8.4 | 4-functional acrylate ester 16.1 | Vinyl acrylate ester 25.7 |
| Comparative Example 3 | Monofunctional acrylate ester 8.4 | 2-functional methacrylate ester 4.7 | 4-functional acrylate ester 9.1 | Vinyl methacrylate ester 11.4 |
| Comparative Example 4 | Monofunctional methacrylate ester 6.3 | 2-functional acrylate ester 11.2 | 5-functional acrylate ester 5.3 | Urethane acrylate ester 12.2 |

**[Table 3]**

| | Liquid crystal compound content (mass%) | Organic compound content (mass%) | Additive compound content (mass%) | Additive compound | Resistivity (Ω·m) |
|---|---|---|---|---|---|
| Example 1 | 50.8 | 48.7 | 0.5 | Ethyl piperidine-4-carboxylate | 7.5 x 10⁻¹⁰ |
| Example 2 | 50.2 | 49.5 | 0.3 | Ethyl piperidine-4-carboxylate | 1.0 x 10⁻¹¹ |
| Example 3 | 40.9 | 57.1 | 2.0 | Piperidine | 1.8 x 10⁻⁷ |
| Example 4 | 73.0 | 18.6 | 8.4 | Diphenyl phosphate | 2.8 x 10⁻⁹ |
| Example 5 | 36.1 | 58.6 | 5.3 | Ethyl piperidine-4-carboxylate | 3.1 x 10⁻⁸ |
| Example 6 | 30.4 | 55.7 | 13.9 | Piperidine | 5.0 x 10⁻⁹ |
| Example 7 | 65.7 | 26.4 | 7.9 | Piperidine | 5.7 x 10⁻⁹ |
| Example 8 | 58.2 | 25.8 | 16.0 | Diphenyl phosphate | 1.7 x 10⁻⁷ |
| Example 9 | 41.5 | 48.0 | 10.5 | Ethyl piperidine-4-carboxylate | 2.1 x 10⁻⁸ |
| Example 10 | 28.4 | 59.2 | 12.4 | Ethyl piperidine-4-carboxylate | 2.4 x 10⁻⁹ |
| Comparative Example 1 | 46.3 | 53.6 | 0.1 | Ethyl piperidine-4-carboxylate | 1.6 x 10⁻¹² |
| Comparative Example 2 | 15.9 | 64.4 | 19.7 | Diphenyl phosphate | 1.4 x 10⁻⁵ |
| Comparative Example 3 | 48.9 | 33.6 | 17.5 | Piperidine | 2.2 x 10⁻¹³ |
| Comparative Example 4 | 45.0 | 35.0 | 20.0 | Piperidine | 8.6 x 10⁻⁴ |

Next, the liquid crystal element 1 of the present invention shown in FIG. 1 was produced using the prepared liquid crystal composition of the present invention.

Further, a liquid crystal element having the same structure as the liquid crystal element of the present invention shown in FIG. 1 (hereinafter referred to as a "conventional liquid crystal element") was produced using the prepared conventional liquid crystal composition.

Then, with respect to the liquid crystal element 1 of the present invention and the conventional liquid crystal element, an AC voltage was arbitrarily changed from 0 V to 100 V and applied, and the corresponding "haze rate" and "total light transmittance" were measured. Meanwhile, an AC voltage was arbitrarily changed from 100 V to 0 V and applied, and the corresponding "haze rate" and "total light transmittance" were measured.

Here, the "haze rate" and the "total light transmittance" were measured using a haze meter (manufactured by Nippon Denshoku Industries Co., Ltd., NDH-7000SPII).

The results are shown in Table 4. Here, a difference between the "total light transmittance during OFF" and the "total light transmittance during ON" is described in Table 4 as "contrast."

**[Table 4]**

| | Haze rate (%) | | Total light transmittance (%) | | Contrast (%) | Voltage at which haze rate falls below 10% (exceeds 90%) (v) |
|---|---|---|---|---|---|---|
| | OFF | ON (100V) | OFF | ON (100V) | | |
| Example 1 | 92.3 | 7.4 | 8.3 | 45.7 | 37.4 | 90 |
| Example 2 | 92.6 | 9.8 | 9.3 | 39.7 | 30.4 | 100 |
| Example 3 | 75.3 | 4.3 | 6.4 | 31.2 | 24.8 | 50 |
| Example 4 | 99.4 | 7.1 | 5.8 | 37.7 | 31.9 | 90 |
| Example 5 | 99.9 | 3.6 | 7.9 | 39.1 | 31.2 | 50 |
| Example 6 | 8.5 | 92.8 | 73.1 | 50.8 | 22.3 | 30 |
| Example 7 | 5.8 | 93.68 | 78.3 | 57.1 | 21.2 | 50 |
| Example 8 | 68.6 | 1.1 | 4.8 | 35.0 | 30.2 | 50 |
| Example 9 | 99.5 | 2.6 | 6.7 | 36.4 | 29.7 | 40 |
| Example 10 | 98.1 | 1.1 | 4.4 | 31.9 | 27.5 | 30 |
| Comparative Example 1 | 80.3 | 12.7 | 17.8 | 25.1 | 7.3 | 120 |
| Comparative Example 2 | 90.1 | 12.5 | 13.9 | 19.3 | 5.4 | 130 |
| Comparative Example 3 | 8.4 | 91.9 | 88.3 | 86.1 | 2.2 | 70 |
| Comparative Example 4 | 4.1 | 92.7 | 89.1 | 85.7 | 3.4 | 110 |

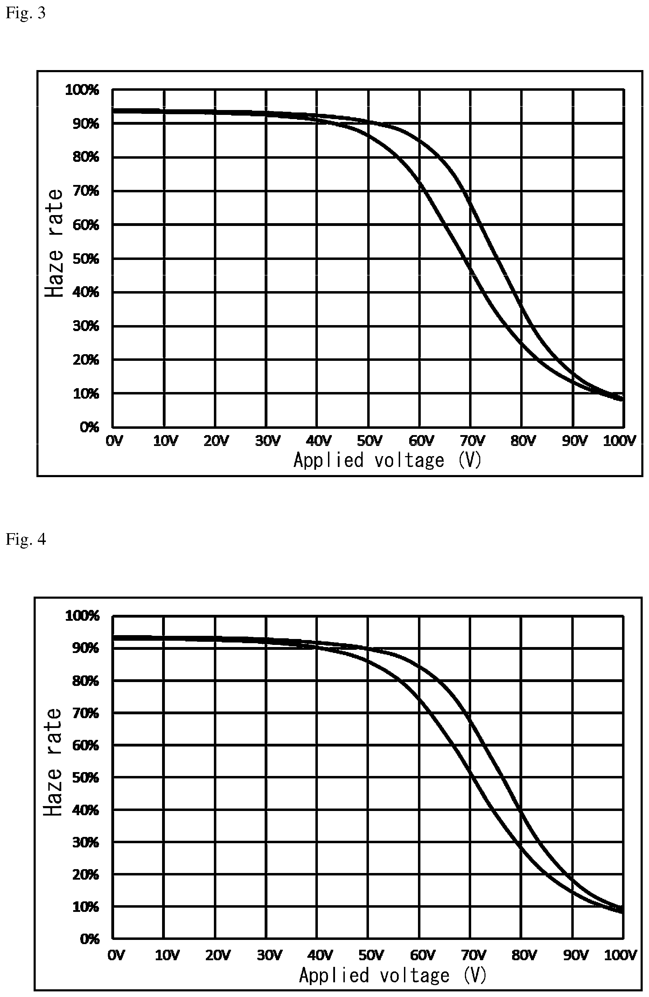

Further, hysteresis curves of the respective Examples and the respective Comparative Examples are shown in FIGS. 3 to 16.

Each hysteresis curve is a curve obtained by gradually applying an AC voltage from 0 V to 100 V and plotting a change in the haze rate, and, after applying the AC voltage up to 100 V, gradually decreasing the AC voltage in the reverse direction toward 0 V and similarly showing (plotting) a change in the haze rate in a drawing.

That is, FIG. 3 is a schematic view showing a hysteresis curve of a liquid crystal element (Example 1) to which the present invention is applied.

Further, FIG. 4 is a schematic view showing a hysteresis curve of a liquid crystal element (Example 2) to which the present invention is applied.

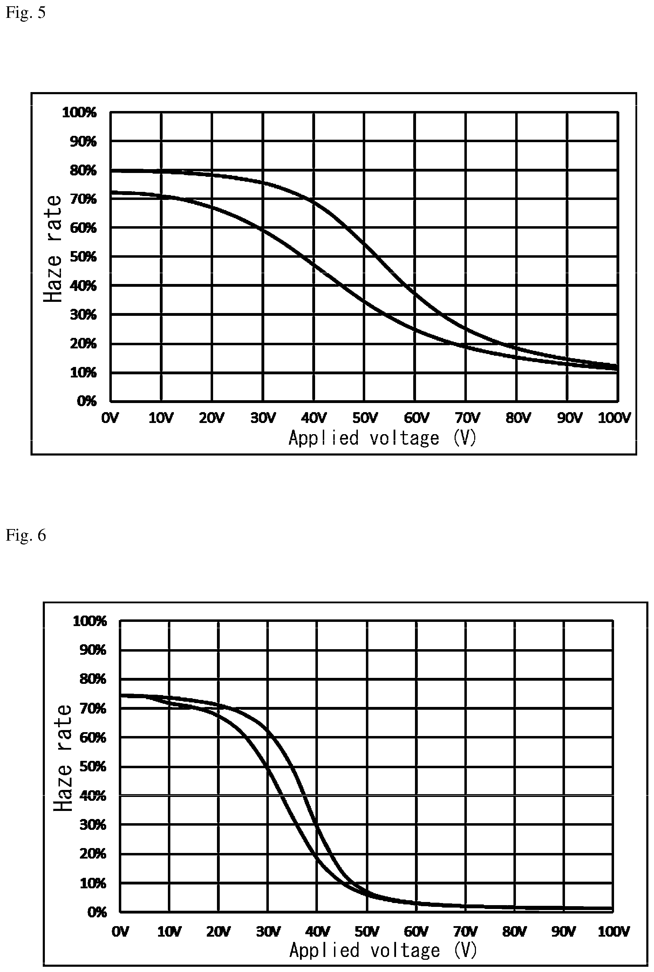

Further, FIG. 5 is a schematic view showing a hysteresis curve of a conventional liquid crystal element (Comparative Example 1).

Further, FIG. 6 is a schematic view showing a hysteresis curve of a liquid crystal element (Example 3) to which the present invention is applied.

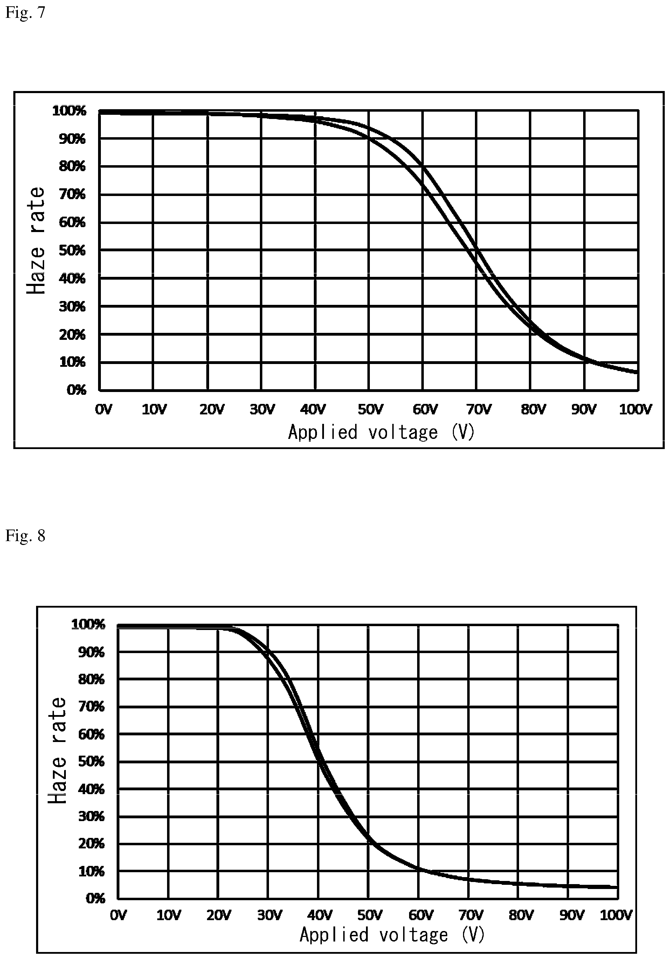

Further, FIG. 7 is a schematic view showing a hysteresis curve of a liquid crystal element (Example 4) to which the present invention is applied.

Further, FIG. 8 is a schematic view showing a hysteresis curve of a liquid crystal element (Example 5) to which the present invention is applied.

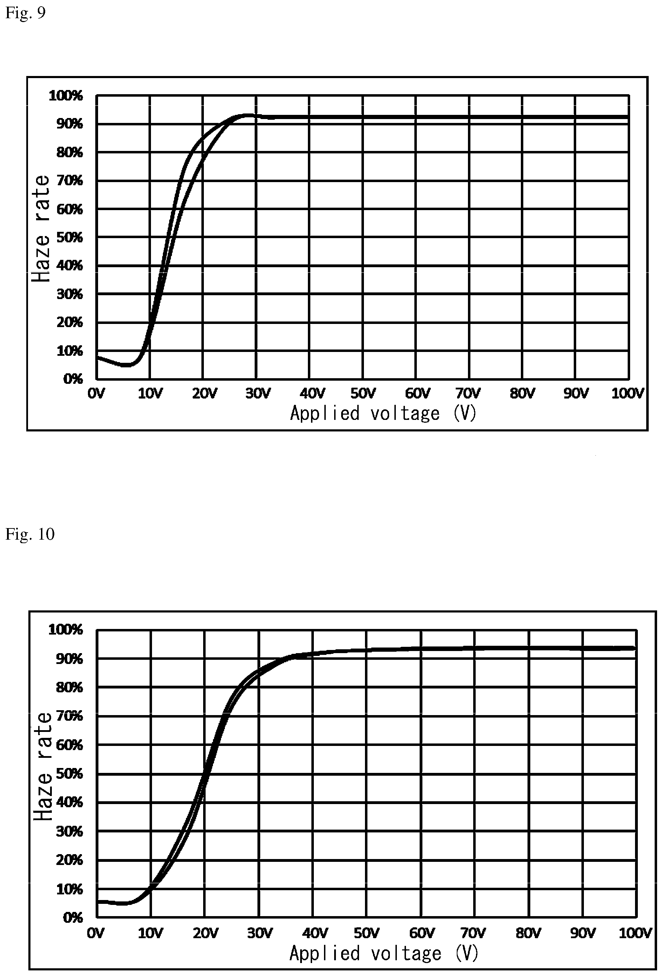

Further, FIG. 9 is a schematic view showing a hysteresis curve of a liquid crystal element (Example 6) to which the present invention is applied.

Further, FIG. 10 is a schematic view showing a hysteresis curve of a liquid crystal element (Example 7) to which the present invention is applied.

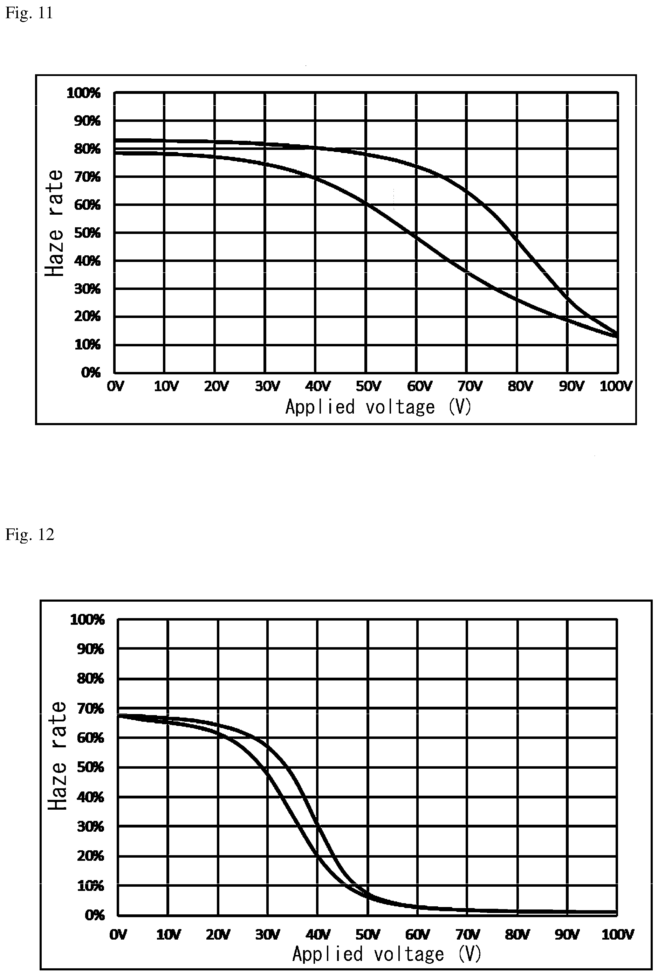

Further, FIG. 11 is a schematic view showing a hysteresis curve of a conventional liquid crystal element (Comparative Example 2).

Further, FIG. 12 is a schematic view showing a hysteresis curve of a liquid crystal element (Example 8) to which the present invention is applied.

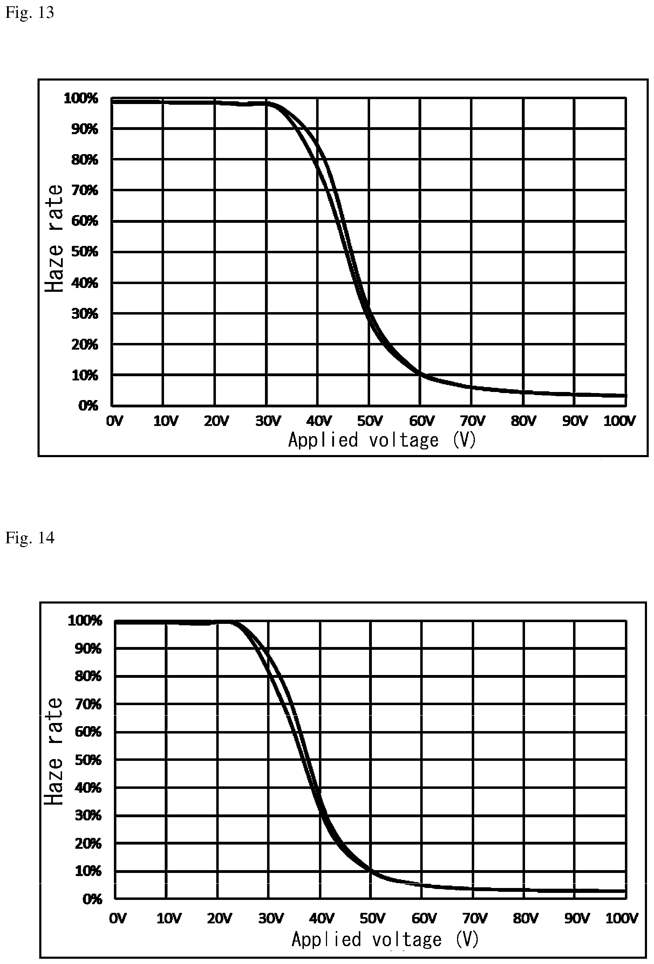

Further, FIG. 13 is a schematic view showing a hysteresis curve of a liquid crystal element (Example 9) to which the present invention is applied.

Further, FIG. 14 is a schematic view showing a hysteresis curve of a liquid crystal element (Example 10) to which the present invention is applied.

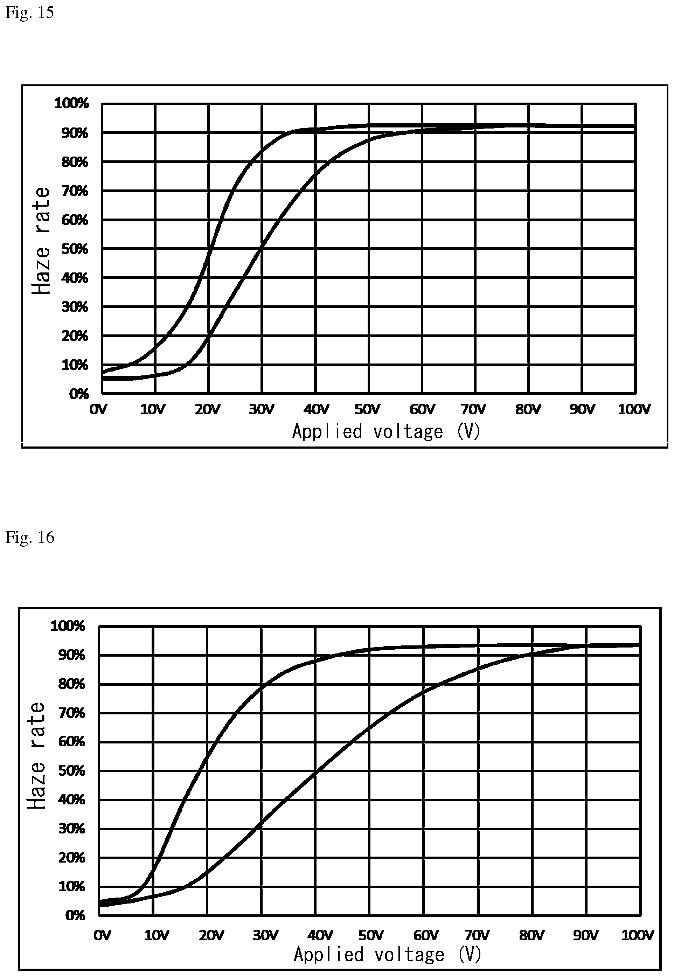

Further, FIG. 15 is a schematic view showing a hysteresis curve of a conventional liquid crystal element (Comparative Example 3).

Further, FIG. 16 is a schematic view showing a hysteresis curve of a conventional liquid crystal element (Comparative Example 4).

In FIGS. 3 to 16, the vertical axis indicates the haze rate, and the horizontal axis indicates the applied voltage.

As is apparent from the resistivity values shown in Table 3 and FIGS. 3 to 16, the hysteresis curves of the liquid crystal elements of Examples 1 to 10 using the liquid crystal compositions of the present invention, in which the resistivity was within the range of 1 x 10⁻¹¹ Ω·m or greater and less than 1 x 10⁻⁵ Ω·m, had smaller hysteresis than the hysteresis curves of the liquid crystal elements of Comparative Examples 1 to 4 using the conventional liquid crystal compositions, in which the resistivity did not fall within the range of 1 x 10⁻¹¹ Ω·m or greater and less than 1 x 10⁻⁵ Ω·m.

The hysteresis curve of the liquid crystal element of Example 5 using the liquid crystal composition having a resistivity of 3.1 x 10⁻⁸ Ω·m, the hysteresis curve of the liquid crystal element of Example 7 using the liquid crystal composition having a resistivity of 5.7 x 10⁻⁹ Ω·m, the hysteresis curve of the liquid crystal element of Example 9 using the liquid crystal composition having a resistivity of 2.1 x 10⁻⁸ Ω·m, and the hysteresis curve of the liquid crystal element of Example 10 using the liquid crystal composition having a resistivity of 2.4 x 10⁻⁹ Ω·m had particularly small hysteresis.

Further, criteria for judgment based on the numerical values shown in Table 4 are as follows.

That is, when the haze rate became 10% or less, a transparent state was judged to have been obtained.

Further, when the "voltage at which the haze rate falls below 10%" or the "voltage at which the haze rate exceeds 90%" was 100 V or less, the response was judged to be "high," and when the voltage exceeded 100 V, the response was judged to be "low."

Furthermore, the larger the difference between the "total light transmittance during OFF" and the "total light transmittance during ON," the more favorable the contrast was judged to be.

As is apparent from Table 4, in the liquid crystal elements of Examples 1 to 10, the haze rate was 10% or less during either OFF or ON, and the liquid crystal elements were judged to be transparent.

On the other hand, in the liquid crystal elements of Comparative Examples 1 to 2, the haze rate did not become 10% or less in either OFF or ON, and the liquid crystal elements could not be judged to be transparent.

Further, as is apparent from Table 4, in the liquid crystal elements of Examples 1 to 10, the "voltage at which the haze rate falls below 10%" or the "voltage at which the haze rate exceeds 90%" was all 100 V or less, and the response could be judged to be "high."

On the other hand, in the liquid crystal elements of Comparative Examples 1 to 2 and Comparative Example 3, the "voltage at which the haze rate falls below 10%" or the "voltage at which the haze rate exceeds 90%" exceeded 100 V, and the response was judged to be "low."

Furthermore, as is apparent from Table 4, in all of the liquid crystal elements of Examples 1 to 10, the "contrast," which is the difference between the "total light transmittance during OFF" and the "total light transmittance during ON," was large, namely, 20% or greater, and the contrast could be judged to be favorable.

On the other hand, in all of the liquid crystal elements of Examples 1 to 4, the "contrast" was small, namely, 10% or less, and the contrast could not be judged to be favorable.

Further, although the liquid crystal composition of Example 9 and the liquid crystal composition of Comparative Example 1 differ in that the liquid crystal composition of Example 9 comprises a "3-functional acrylate ester monomer," whereas the liquid crystal composition of Comparative Example 1 comprises a "3-functional methacrylate ester monomer," both liquid crystal compositions are constituted by substantially the same organic compounds and additive compound, and only the blending amount of the additive compound greatly differs. Nevertheless, the results greatly differed.

That is, whereas the resistivity of the liquid crystal composition of Example 9 was 2.1 x 10⁻⁸ Ω·m, the resistivity of the liquid crystal composition of Comparative Example 1 was 1.6 x 10⁻¹² Ω·m. As is understood from comparison between FIG. 5 and FIG. 13, the hysteresis curve of the liquid crystal element of Example 9 had hysteresis suppressed to a smaller level than the hysteresis curve of the liquid crystal element of Comparative Example 1. Further, as is understood from Table 4, whereas the contrast of the liquid crystal element of Example 9 was 29.7%, the contrast of the liquid crystal element of Comparative Example 1 was markedly low at 7.3%.

Further, meanwhile, even when the liquid crystal composition of Example 2 and the liquid crystal composition of Comparative Example 1, in which only the organic compounds differed and the blending amounts were substantially the same, were compared, the results greatly differed.

That is, whereas the resistivity of the liquid crystal composition of Example 2 was 1.0 x 10⁻¹¹ Ω·m, the resistivity of the liquid crystal composition of Comparative Example 1 was 1.6 x 10⁻¹² Ω·m. As is understood from comparison between FIG. 4 and FIG. 5, the hysteresis curve of the liquid crystal element of Example 2 had hysteresis suppressed to a smaller level than the hysteresis curve of the liquid crystal element of Comparative Example 1. Further, as is understood from Table 4, whereas the contrast of the liquid crystal element of Example 2 was 30.4%, the contrast of the liquid crystal element of Comparative Example 1 was markedly low at 7.3%.

In this manner, the liquid crystal element using the liquid crystal composition in which the resistivity was extremely low compared with the conventional liquid crystal composition value of 10⁹ Ω·m or greater and, moreover, in which the resistivity fell within the specific range provided results of having smaller hysteresis and greater contrast than a liquid crystal element using a liquid crystal composition having a resistivity slightly outside such a specific range.

From these results, the present invention, in which the resistivity of a liquid crystal composition is adjusted to 1 x 10⁻¹¹ Ω·m or greater and less than 1 x 10⁻⁵ Ω·m, can be said to greatly contribute to industrial development.

As described above, since the resistivity of the liquid crystal composition of the present invention is 1 x 10⁻¹¹ Ω·m or greater and less than 1 x 10⁻⁵ Ω·m, hysteresis in the liquid crystal element of the present invention using the liquid crystal composition of the present invention can be suppressed.

Further, since the resistivity of the liquid crystal composition of the present invention is 1 x 10⁻¹¹ Ω·m or greater and less than 1 x 10⁻⁵ Ω·m, liquid crystal orientation can be enhanced.

By enhancing liquid crystal orientation, the black display level in a dark state becomes high, and contrast can be improved.

Accordingly, the liquid crystal composition of the present invention can realize production of a liquid crystal element having favorable response and contrast.

Further, since the liquid crystal composition of the present invention is provided with a liquid crystal layer having such a liquid crystal composition of the present invention, the response and contrast are favorable.

### Reference Signs List

1: Liquid crystal element
2: First transparent resin film substrate
3: Second transparent resin film substrate
4: First transparent conductive film
5: Second transparent conductive film
6: Liquid crystal layer
7: Conductor wire

20: Laser oscillator
30: Microscope temperature-controlled stage
31: Observation window
32: Sample stage
33: Light receiver
40: Oscilloscope

## Claims

1. A liquid crystal composition comprising a polymerizable organic compound and a liquid crystal compound, wherein
the resistivity of the liquid crystal composition is 1 x 10⁻¹¹ Ω·m or greater and less than 1 x 10⁻⁵ Ω·m,
the liquid crystal composition comprises at least one additive compound selected from ethyl piperidine-4-carboxylate, piperidine, or diphenyl phosphate, and
the content of the additive compound is 0.3 to 16 mass% based on the total amount of the liquid crystal composition.

2. The liquid crystal composition according to claim 1, wherein
the resistivity of the liquid crystal composition is 1 x 10⁻⁹ Ω·m or greater and less than 1 x 10⁻⁷ Ω·m.

3. The liquid crystal composition according to claim 2, wherein
the additive compound is ethyl piperidine-4-carboxylate, and
the content of the additive compound is 5.0 to 13.0 mass% based on the total amount of the liquid crystal composition.

4. A liquid crystal element comprising:
a planar first substrate,
a first conductive film which is disposed on one surface side of the first substrate and has electroconductivity,
a liquid crystal layer which is disposed on a side of the first conductive film opposite to the first substrate and has a liquid crystal composition,
a second conductive film which is disposed on a side of the liquid crystal layer opposite to the first conductive film and has electroconductivity, and
a planar second substrate disposed on a side of the second conductive film opposite to the liquid crystal layer, wherein
the liquid crystal composition comprises a polymerizable organic compound and a liquid crystal compound,
the resistivity of the liquid crystal composition is 1 x 10⁻¹¹ Ω·m or greater and less than 1 x 10⁻⁵ Ω·m,
the liquid crystal composition comprises at least one additive compound selected from ethyl piperidine-4-carboxylate, piperidine, or diphenyl phosphate, and
the content of the additive compound is 0.3 to 16 mass% based on the total amount of the liquid crystal composition.
